# EUROPEAN PATENT APPLICATION

(11) **EP 4 657 938 A1**
(43) Date of publication of application: **03.12.2025**
(21) Application number: 23918996.2
(22) Date of filing: 31.01.2023
(51) Int. Cl.: H04W 72/00

(54) **TRANSMISSION RESOURCE DETERMINATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LIANG, Bin, Dongguan, Guangdong 523860 (CN)
(74) Representative: Novagraaf Technologies
(86) International application number: PCT/CN2023/074021
(87) International publication number: WO 2024/159416

(57) **Abstract**

The present application relates to the technical field of communications, and discloses a transmission resource determination method and apparatus, a device, and a storage medium. The method is executed by a terminal, and comprises: determining an uplink transmission resource and/or a downlink transmission resource on the basis of a first sub-band configuration and/or a transmission resource configuration.

## Description

### TECHNICAL FIELD

Embodiments of the present disclosure relate to the technical field of communications, and in particular, relate to a method and apparatus for determining a transmission resource, and a device and a storage medium thereof.

### RELATED ART

Unlike from time division duplex (TDD) and frequency division duplex (FDD) technologies, a cross-duplex (XDD) technology has been introduced in the 3^{rd} Generation Partnership Project (3GPP). With the XDD, data may be transmitted and received simultaneously on a sub-band within the same sub-frame. The XDD technology is mainly implemented at a network device.

On this basis, a possibility arises for the network device to configure an uplink (UL) sub-band in a downlink (DL) slot or symbol (or a flexible slot or symbol). For the XDD technology, how to use and configure a UL transmission resource and/or a DL transmission resource is still under discussion.

### SUMMARY

Embodiments of the present disclosure provide a method and apparatus for determining a transmission resource, and a device and a storage medium thereof. The technical solutions are as follows.

According to some embodiments of the present disclosure, a method for determining a transmission resource is provided. The method is performed by a terminal, and includes:
determining at least one of a UL transmission resource or a DL transmission resource based on at least one of first sub-band configuration or transmission resource configuration.

According to some embodiments of the present disclosure, an apparatus for determining a transmission resource. The apparatus includes:
a determining module, configured to determine at least one of a UL transmission resource or a DL transmission resource based on at least one of first sub-band configuration or transmission resource configuration.

According to some embodiments of the present disclosure, a terminal is provided. The terminal includes a processor, wherein the processor is configured to perform the method for determining the transmission resource in the above embodiments.

According to some embodiments of the present disclosure, a computer-readable storage medium is provided. The computer-readable storage medium stores one or more computer programs, wherein the one or more computer programs, when loaded and run by a processor, cause the processor to perform the method for determining the transmission resource in the above embodiments.

According to some embodiments of the present disclosure, a chip is provided. The chip includes programmable logical circuity and/or one or more program instructions, wherein the chip is configured to perform the method for determining the transmission resource in the above embodiments.

According to some embodiments of the present disclosure, a computer program product or computer program is provided. The computer program includes one or more computer instructions, wherein the one or more computer instructions are stored in a computer-readable storage medium, and when read and executed by a processor, cause the processor to perform the method for determining the transmission resource in the above embodiments.

The technical solutions according to the embodiments of the present disclosure achieve the following technical effects.

The method for determining the transmission resource is provided, such that at least one of the UL transmission resource or the DL transmission resource is determined based on at least one of the first sub-band configuration or the transmission resource configuration. The first sub-band configuration is sub-band full duplex (SBFD) configuration, and the transmission resource is at least one of a configured grant (CG) resource or a semi-persistent scheduling (SPS) resource.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a 5^{th} generation (5G) network architecture according to some embodiments of the present disclosure;
FIG. 2 is a schematic diagram of an SBFD sub-frame according to some embodiments of the present disclosure;
FIG. 3 is a flowchart of a method for determining a transmission resource according to some embodiments of the present disclosure;
FIG. 4 is a flowchart of a method for determining a transmission resource according to some embodiments of the present disclosure;
FIG. 5 is a schematic diagram of SBFD slot configuration according to some embodiments of the present disclosure;
FIG. 6 is a flowchart of a method for determining a transmission resource according to some embodiments of the present disclosure;
FIG. 7 is a schematic diagram of SBFD slot configuration according to some embodiments of the present disclosure;
FIG. 8 is a flowchart of an apparatus for determining a transmission resource according to some embodiments of the present disclosure; and
FIG. 9 is a schematic structural diagram of a communication device according to some embodiments of the present disclosure.

### DETAILED DESCRIPTION

For clearer descriptions of the objectives, technical solutions, and advantages of the present disclosure, the embodiments of the present disclosure are further detailed hereinafter in conjunction with the accompanying drawings.

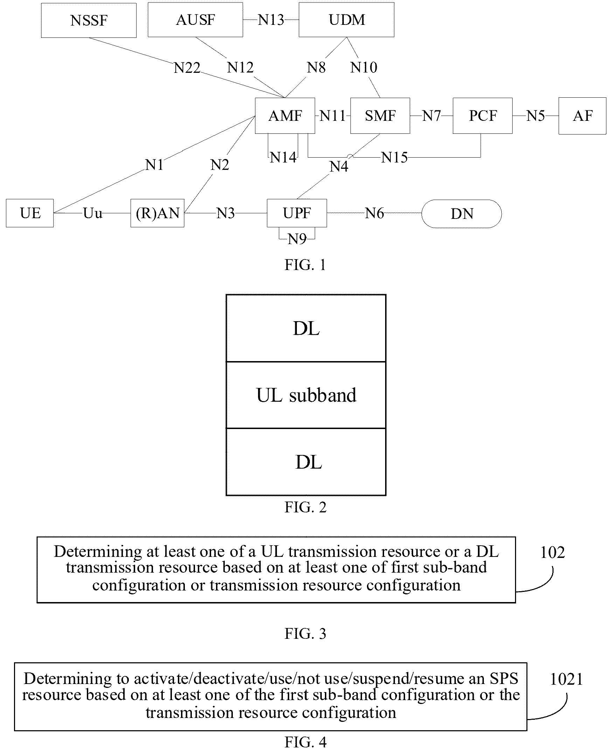

Referring to FIG. 1, in the 5G communication, the network system architecture includes a user equipment (UE), a (radio) access network ((R)AN), a user plane function (UPF), a data network (DN), and a control plane function.

The control plane function includes an access and mobility management function (AMF), a session management function (SMF) a policy control function (PCF), a unified data manager (UDM), an application function (AF), a network slice selection function (NSSF), and an authentication server function (AUSF).

The UE and the AN achieve access stratum (AS) connection, AS message interaction, and wireless data transmission over a Uu interface, and the UE and the AMF achieve non-access stratum (NAS) connection and NAS message interaction over an N1 interface. The AMF implements a mobility management function in the core network, and the SMF implements a session management function in the core network. The AMF performs mobility management on the UE, and forwards session management-related information between the UE and the SMF. The PCF implements a policy management function in the core network, and develops policies related to the mobility management, the session management, charging, and the like on the UE. The UPF implements a user plane function in the core network, and performs data transmission with external networks over an N6 interface and performs data transmission with the AN over an N3 interface.

### UL and DL configuration

For a TDD system, the UL and DL configuration is used to configure or indicate a transmission direction of each symbol. A 5G new radio (NR) system adopts one or more modes to indicate the transmission direction of each symbol, that is, a UL mode, a DL mode, and a flexible mode. Illustratively, the three modes include TDD-UL-DL-ConfigCommon, TDD-UL-DL-ConfigDedicated, and slot format indication (SFI).

TDD-UL-DL-ConfigCommon and TDD-UL-DL-ConfigDedicated are high-layer signalings and are configured for a cell. TDD-UL-DL-ConfigCommon is transmitted to all users in the cell over broadcast information, and the TDD-UL-DL-ConfigDedicated is transmitted to in-need users independently based on radio resource control (RRC).

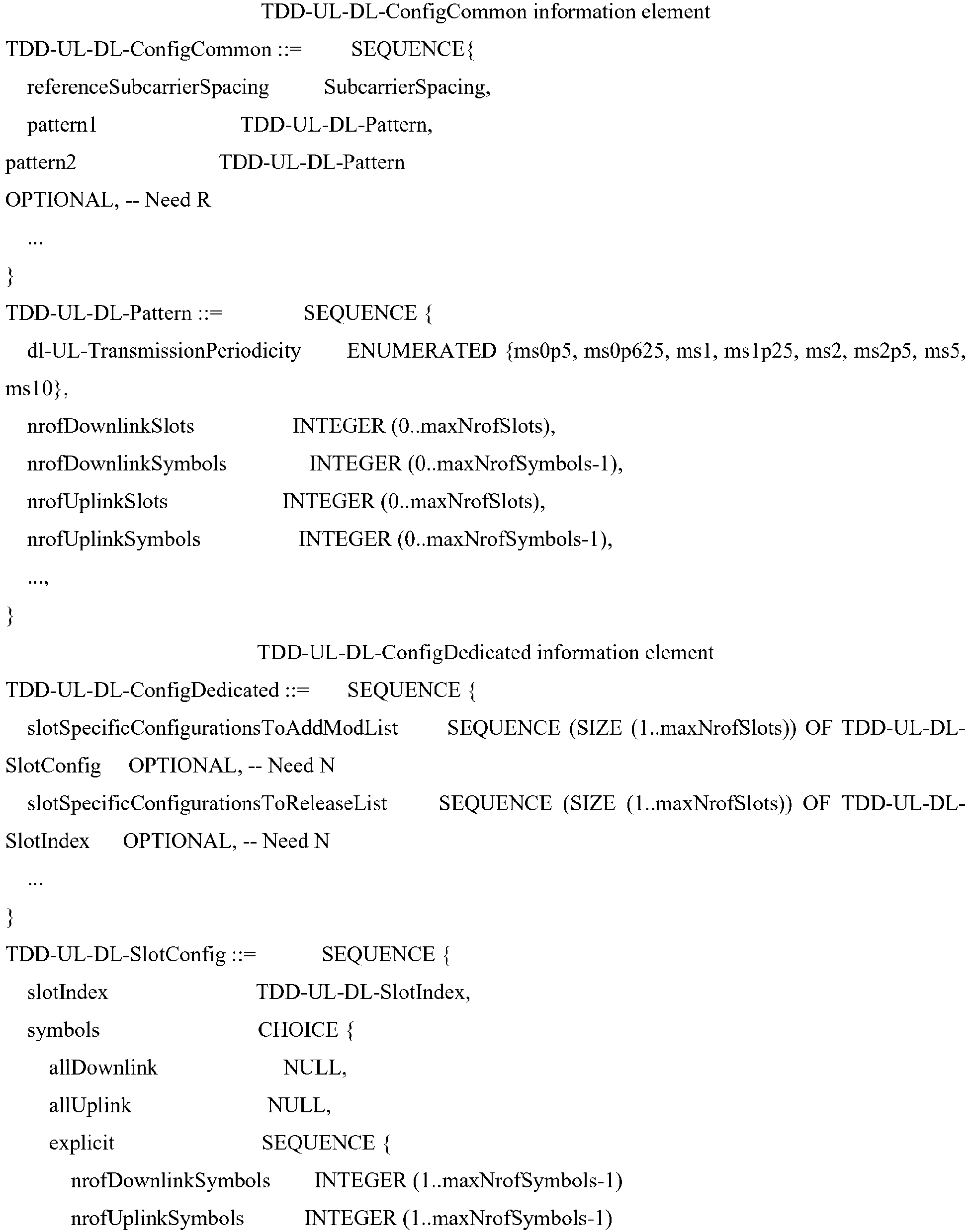

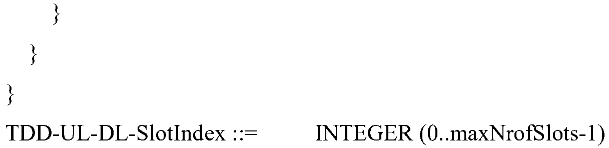

Illustratively, the SFI indicates transmission directions of various symbols of various carriers over DL control information (DCI) or DCI format 2_0 of a user group. As the SPI is a dynamic signaling, the SPI indicates a semi-persistently configured flexible slot/symbol as a determined transmission method, including UL and DL.

### CG enhancement in ultra-reliable low-latency communications (URLLC)

The NR supports semi-persistent scheduling. The corresponding DL is SPS, and the corresponding UL is CG. The SPS is configured based on RRC and then activated based on DCI for use; CG is categorized into two types represented as a first CG type (Type-1 CG) and a second CG type (Type-2 CG). Type-1 CG is a CG that is usable immediately the CG is configured over RRC, and Type-2 CG is a CG that is usable immediately the CG is configured over RRC and activation based on DCI.

The URLLC enhances CG periodicity to meet stringent latency requirements of URLLC traffic and to support a traffic periodicity at any slot-level granularity.

Multi-CG is introduced in the URLLC to support URLLC traffic and a stringent latency requirement of traffic. Hybrid automatic repeat-request (HARQ) processes configured based on different CGs are different.

For CG activation, a single CG activation method is used. For CG deactivation, both single CG deactivation and joint CG deactivation are supported.

Due to the collision between the CG resource and other resources, automatic transmission for CG is introduced to ensure that medium access control (MAC) protocol data units (PDUs) that have been assembled in the CG resource (that is, deprioritized MAC PDUs) are not discarded/are immediately transmitted. For a MAC PDU that has been assembled for a CG transmission, where the CG may not be used for transmission due to a resource conflict, the CG resource in the same CG configuration in the subsequent same HARQ process is used for a new transmission. The automatic transmission is determined through the autonomous transmission (autonomous Tx).

In a case where different physical layer priorities are configured, where a collision is present between CGs, the MAC indicates one or more MAC PDUs to the physical layer. Similarly, in a case where a collision is present between data and a scheduling request (SR), the MAC indicates the SR and the MAC PDUs to the physical layer.

In some embodiments, in a case where a low-priority resource is present, for example, when logical channel (LCH)-based prioritization and autonomous Tx are configured, a configured grant retransmission timer (CGRT) is terminated.

### SBFD symbol/slot

Illustratively, the SBFD symbol/slot may be understood as a UL sub-band in a DL symbol/slot. FIG. 2 is a schematic diagram of an SBFD sub-frame according to some embodiments of the present disclosure, and a middle sub-band in a DL slot is configured as a UL sub-band.

Different from the TDD technology and the FDD technology, the XDD technology is introduced in the 3GPP. That is, data is transmitted and received simultaneously on a sub-band within the same sub-frame. The XDD technology is mainly implemented at a network device. The terminal keeps a current state, that is, data is transmitted or received in a sub-frame.

In some embodiments, the SBFD configuration is the semi-static configuration preferentially, and is even the semi-persistent configuration. Illustratively, for indication of sub-band locations for SBFD operation, semi-persistent configuration of sub-band time and frequency location as baseline is studied.

Based on the above description, the network device configures the UL sub-band in the DL slot/symbol or in a flexible slot/symbol. In some embodiments, the CG/SPS is semi-persistently configured in the UL/DL transmission, in a case where the SBFD is used, how to use or configure the CG/SPS needs to be discussed.

FIG. 3 is a flowchart of a method for determining a transmission resource according to some embodiments of the present disclosure. The method is performed by a terminal, and includes the following processes.

**In S102,** at least one of a UL transmission resource or a DL transmission resource is determined based on at least one of first sub-band configuration or transmission resource configuration.

In some embodiments, use of the first sub-band configuration includes at least one of activation, deactivation, use, unuse, suspension, or resumption.

In some embodiments, the SBFD technology is also referred to as a sub-band transmission-related technology or a partial-bandwidth transmission-related technology. That is, only the sub-band or part of the bandwidth performs transmission, for example, UL transmission. It should be understood that the present disclosure is illustrated using the SBFD, and other terms used to describe the sub-band transmission-related technology or the partial-bandwidth transmission-related technology fall within the scope of protection of the present disclosure, which are not elaborated herein. On this basis, the first sub-band configuration is also represented as sub-band transmission configuration, partial-bandwidth transmission configuration, and the like.

Illustratively, the transmission resource configuration includes at least one of CG configuration or SPS configuration. In some embodiments, the terminal determines resource configuration of the CG/SPS resource, or determines whether the CG/SPS resource is available, or determines how to perform UL/DL transmission based on at least one of the SBFD configuration or the CG/SPS configuration. The SBFD configuration is configured by the network device.

In some embodiments, the CG configuration is a CG configuration in the first sub-band configuration or a configuration in the transmission resource configuration, and the transmission resource configuration is the CG configuration (CG-config). In some embodiments, the CG configuration is associated with or is not associated with the first sub-band configuration. In some embodiments, the CG configuration is s configuration in the UL resource or s configuration in the first sub-band resource. In some embodiments, the CG configuration is configured in a flexible time-domain unit. In some embodiments, the CG configuration is an optional configuration, or a conditional configuration, or a mandatory configuration.

In some embodiments, the SPS configuration is an SPS configuration in the first sub-band configuration or a configuration in the transmission resource configuration, and the transmission resource configuration is the SPS configuration (SPS-config). In some embodiments, the SPS configuration is associated with or is not associated with the first sub-band configuration. In some embodiments, the SPS configuration is configuration in the DL resource or configuration in the first sub-band resource. In some embodiments, the SPS configuration is configured in a flexible time-domain unit. In some embodiments, the SPS configuration is an optional configuration, or a conditional configuration, or a mandatory configuration.

In some embodiments, the terminal used to perform the method for determining the transmission resource includes at least one of: a terminal that supports SBFD and/or identifies SBFD, a first terminal, a terminal that does not support SBFD and/or does not identify SBFD, a terminal at a predetermined version, or a terminal at a version earlier than a predetermined version. The first terminal is a traditional terminal (a legacy UE). The predetermined version is a specific version, a specified version, an indicated version, and the like. For example, the terminal used to perform the method for determining the transmission resource includes a terminal at a version indicated/specified in the communication protocol or a terminal at a version negotiated by the supplier.

In some embodiments, S102 includes at least one of:
determining at least one of a resource position of the UL transmission resource or a resource position of the DL transmission resource based on at least one of the first sub-band configuration or the transmission resource configuration;
determining at least one of an available state of the UL transmission resource or an available state of the DL transmission resource based on at least one of the first sub-band configuration or the transmission resource configuration; or
determining, based on at least one of the first sub-band configuration or the transmission resource configuration, whether to use at least one of the UL transmission resource or the DL transmission resource for resource transmission.

The available state indicates that the UL transmission resource and/or the DL transmission resource are available or unavailable, or that the UL transmission resource and/or the DL transmission resource are suspended or resumed.

Using the CG/SPS resource as an example, based on at least one of the first sub-band configuration or the transmission resource configuration, the terminal performs at least one of: determining the resource position of the CG/SPS resource, determining whether the CG/SPS resource is available, or determining whether to use the CG/SPS resource for UL/DL resource transmission.

In some embodiments, based on the SBFD configuration or indication, the terminal determines to activate/deactivate/use/not use/suspend/resume the SPS resource.

For example, the SPS resource is configured for the SBFD configuration. In some embodiments, the SPS resource is configured for the SBFD slot/symbol or the DL sub-band of the SBFD slot/symbol.

Illustratively, in a case where a slot/symbol is the SBFD slot/symbol, or the SBFD is activated or used in a slot/symbol, the terminal performs at least one of:
· activating or using a first SPS resource, wherein the first SPS resource is an SPS resource corresponding to SBFD or an SPS resource corresponding to a DL sub-band of SBFD; and otherwise, the first SPS resource is deactivated or not used;
· deactivating or not using a first CG resource, wherein the first CG resource is a CG resource corresponding to SBFD or a CG resource corresponding to a DL sub-band of SBFD;
· determining a second CG resource to be unavailable, wherein the second CG resource is also referred to as a legacy CG resource;
· deactivating or not using a first SPS resource;
· determining a second SPS resource to be unavailable, wherein the second SPS resource is also referred to as a legacy SPS resource;
· transforming a third SPS resource into an actual SPS resource based on SBFD configuration, wherein the third SPS resource is also referred to as a nominal SPS resource;
· transforming a third CG resource into an actual CG resource based on SBFD configuration, wherein the third CG resource is also referred to as a nominal CG resource;
· deactivating or not using a first SPS resource in a first UL sub-band of a slot or a symbol or a second UL sub-band corresponding to SBFD;
· determining a second SPS resource to be unavailable in a first UL sub-band or a second UL sub-band;
·activating or using a first SPS resource in a first UL sub-band or a second UL sub-band;
· activating or using a first CG resource in a first UL sub-band or a second UL sub-band;
· activating or using an overlapping portion of a second SPS resource and SBFD in a first UL sub-band or a second UL sub-band; or
· activating or using an overlapping portion of a first SPS resource and SBFD SPS in a first UL sub-band or a second UL sub-band.

Illustratively, in a case where a slot/symbol is not the SBFD slot/symbol, or the SBFD is deactivated or not used in a slot/symbol, the terminal uses the second SPS resource, deactivates/does not use the SPS resource corresponding to the SBFD, or deactivates/does not use the SPS resource corresponding to a DL sub-band of the SBFD.

In some embodiments, based on the SBFD configuration or indication, the terminal determines to activate/deactivate/use/not use/suspend/resume the CG resource.

For example, the CG resource is configured for the SBFD configuration. In some embodiments, the CG resource is configured for the SBFD slot/symbol or the DL sub-band of the SBFD slot/symbol. The CG resource is one of a first-type CG resource (also referred to as type 1 CG), a second-type CG resource (also referred to as type 2 CG), or a conditional-type CG resource (also referred to as conditional CG).

Illustratively, in a case where a slot/symbol is the SBFD slot/symbol, or the SBFD is activated or used in a slot/symbol, the terminal performs at least one of:
·activating or using a first SPS resource;
· deactivating or not using a first CG resource;
· determining a second CG resource to be unavailable. The second CG resource is also referred to as a legacy CG resource;
· deactivating or not using a first SPS resource;
· determining a second SPS resource to be unavailable;
· transforming a third SPS resource into an actual SPS resource based on SBFD configuration;
· transforming a third CG resource into an actual CG resource based on SBFD configuration;
· deactivating or not using a first SPS resource in a first UL sub-band or a second UL sub-band;
· determining a second SPS resource to be unavailable in a first UL sub-band or a second UL sub-band;
· activating or using a first SPS resource in a first UL sub-band or a second UL sub-band;
· activating or using a first CG resource in a first UL sub-band or a second UL sub-band;
· activating or using an overlapping portion of a second SPS resource and SBFD in a first UL sub-band or a second UL sub-band; or
· activating or using an overlapping portion of a first SPS resource and SBFD SPS in a first UL sub-band or a second UL sub-band.

Illustratively, in a case where a slot/symbol is not the SBFD slot/symbol, or the SBFD is deactivated or not used in a slot/symbol, the terminal deactivates/does not use the first CG resource, or activates/uses the second CG resource.

In summary, in the method for determining the transmission resource according to the embodiments of the present disclosure, at least one of the UL transmission resource or the DL transmission resource is determined based on at least one of the first sub-band configuration or the transmission resource configuration. The first sub-band configuration is SBFD configuration, and the transmission resource is at least one of a CG resource or an SPS resource.

Referring to FIG. 3, FIG. 4 is a flowchart of a method for determining a transmission resource according to some embodiments of the present disclosure. S102 may be performed in S1021.

**In S1021,** it is determined, based on at least one of the first sub-band configuration or the transmission resource configuration, to activate/deactivate/use/not use/suspend/resume an SPS resource.

The first sub-band configuration is the SBFD configuration, and the transmission resource configuration is the SPS configuration.

In some embodiments, the SPS resource is configured by the network device. In some embodiments, S1021 includes: receiving the SPS resource configured by the network device, and using, activating, or deactivating the SPS resource configured by the network device.

In some embodiments, the SPS resource configured by the network device includes at least one of a first-type SPS resource, a second-type SPS resource, or a conditional-type SPS resource, and/or the SPS resource configured by the network device is determined by the network device based on a DL unit or the first sub-band configuration.

In some embodiments, based on at least one of the first sub-band configuration or the transmission resource configuration, the terminal performs at least one of:
· activating or using a first SPS resource, wherein the first SPS resource is an SPS resource corresponding to SBFD or an SPS resource corresponding to a UL sub-band of SBFD;
· deactivating or not using a first CG resource, wherein the first CG resource is a CG resource corresponding to SBFD or a CG resource corresponding to a UL sub-band of SBFD;
· activating or using a first CG resource;
· determining a second CG resource to be unavailable;
· deactivating or not using a first SPS resource;
· determining a second SPS resource to be unavailable;
· transforming a third SPS resource into an actual SPS resource;
· transforming a third CG resource into an actual CG resource;
· deactivating or not using a first SPS resource in a first UL sub-band of a slot or a symbol or a second UL sub-band corresponding to SBFD;
· determining a second SPS resource to be unavailable in a first UL sub-band or a second UL sub-band;
· activating or using a first SPS resource in a first UL sub-band or a second UL sub-band;
· activating or using a first CG resource in a first UL sub-band or a second UL sub-band;
· activating or using an overlapping portion of a second SPS resource and SBFD in a first UL sub-band or a second UL sub-band; or
· activating or using an overlapping portion of a first SPS resource and SBFD SPS in a first UL sub-band or a second UL sub-band.

In some embodiments, in a case where a condition is satisfied, the terminal performs at least one of the above processes.

That is, in a case where a first condition is satisfied, the terminal performs at least one of the above processes. The first condition includes at least one of: a first time unit being a time unit corresponding to the SBFD; a second time unit being a time unit activated by the SBFD; a first slot being an SBFD slot; a first symbol being an SBFD symbol; the first sub-band configuration being activated in a second slot; or the first sub-band configuration being activated in a second symbol. The first sub-band configuration is the SBFD configuration.

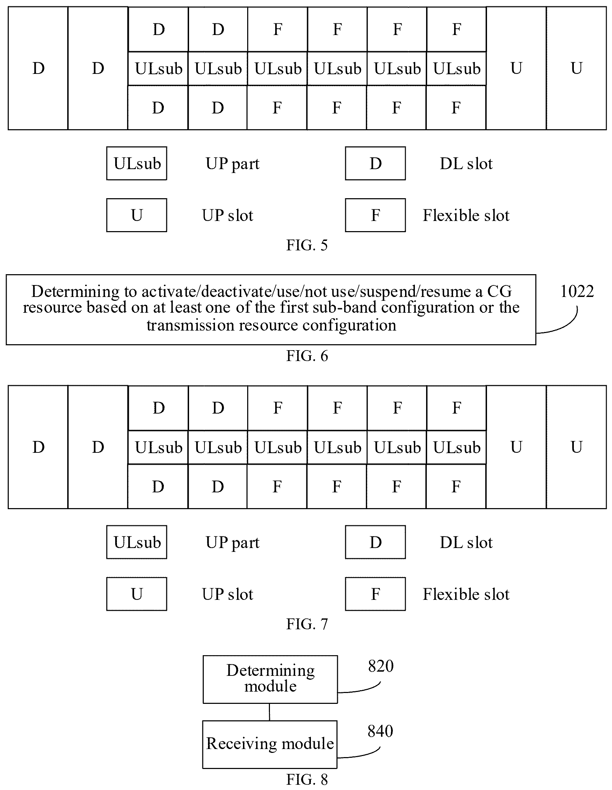

FIG. 5 is a schematic diagram of SBFD slot configuration according to some embodiments of the present disclosure. In some embodiments, the SBFD configuration is supported or not supported in a flexible slot (F slot).

In some embodiments, S1021 includes at least one of processes: deactivating or not using a first SPS resource based on at least one of the first sub-band configuration or the transmission resource configuration, wherein the first SPS resource is an SPS resource corresponding to the first sub-band configuration; or activating or using a second SPS resource based on at least one of the first sub-band configuration or the transmission resource configuration.

In some embodiments, in a case where a condition is satisfied, the terminal performs at least one of the above processes.

That is, in a case where a second condition is satisfied, the terminal performs at least one of the above processes. The second condition includes at least one of: a first time unit being not a time unit corresponding to SBFD; a second unit being a time unit activated by SBFD; a first slot being not an SBFD slot; a first symbol being not an SBFD symbol; the first sub-band configuration being deactivated or not used in a second slot; or the first sub-band configuration being deactivated or not used in a second symbol. The first sub-band configuration is the SBFD configuration.

In some embodiments, the terminal performs some operations based on indication information of the network device.

In some embodiments, S 1021 further includes: receiving first indication information from the network device, wherein the first indication information is used to configure the SPS resource or instructs that the SPS resource be activated or deactivated; and configuring, activating, or using the SPS resource based on the first indication information.

It is to be understood that the SPS configuration is conditionally configured or conditionally activated or deactivated, or the first SPS resource/the second SPS resource is conditionally configured or conditionally activated or deactivated.

For example, the network device conditionally configures the SPS resource or conditionally activates or deactivates the SPS resource. That is, the SBFD configuration is present or used, the slot/symbol of the SBFD is present or used, or the SPS resource is configured, activated, or used.

In some embodiments, at least one of the first sub-band configuration or the transmission resource configuration is configured by the network device. In some embodiments, the method for determining the transmission resource according to the present disclosure further includes receiving configuration information from the network device. The configuration information includes at least one of the first sub-band configuration or the transmission resource configuration.

The first sub-band configuration is the SBFD configuration.

In some embodiments, the configuration information from the network device is carried in an RRC signaling.

In some embodiments, the configuration information includes at least one of: common or cell-level configuration information, terminal-specific configuration information, cell-group-level configuration information, or terminal-group-specific configuration information.

In some embodiments, the common or cell-level configuration information is carried in any of an RRC message, a SIB message, or a MIB message.

In some embodiments, the terminal-specific configuration information is carried in any of a terminal-specific RRC message, DCI, or a DL MAC control element (CE).

In some embodiments, the cell-group-level configuration information is carried in DCI or an RRC message.

In some embodiments, the terminal-group-specific configuration information is carried in DCI, a DL MAC CE, or an RRC message.

In some embodiments, the first sub-band configuration includes at least one of: a slot/symbol of a UL part, a slot/symbol in which SBFD is supported, frequency-domain configuration of a UL part, frequency-domain configuration that supports SBFD, SPS configuration corresponding to the first sub-band configuration, CG configuration corresponding to the first sub-band configuration, SPS configuration corresponding to a DL sub-band of an SBFD slot/symbol, or CG configuration corresponding to a DL sub-band of an SBFD slot/symbol.

In some embodiments, a configuration level of the first sub-band configuration is at least one of a slot, a radio frame, or a symbol.

In some embodiments, the first sub-band configuration includes at least one type of first sub-band configuration.

The configuration type of the first sub-band configuration includes at least one of: periodic first sub-band configuration, semi-persistent first sub-band configuration, dynamic first sub-band configuration, non-periodic first sub-band configuration, common first sub-band configuration, terminal-specific first sub-band configuration, or terminal-group-specific first sub-band configuration.

Based on above description, the SPS resource in the present disclosure is one of: an SPS resource that is used immediately upon configuration based on RRC; an SPS resource that is configured based on RRC and is used immediately upon activation of DCI; an SPS resource that is configured based on RRC and is used immediately upon configuration of the first sub-band; an SPS resource that is configured based on RRC and is effected immediately upon configuration of the first sub-band; an SPS resource that is configured based on RRC and is activated immediately upon configuration of the first sub-band; an SPS resource that is configured based on RRC and is activated immediately upon activation of SBFD; an SPS resource that is configured based on RRC and is deactivated immediately upon deactivation of SBFD; an SPS resource that is configured based on RRC and is de-configured immediately upon de-configuration of SBFD; an SPS resource that is configured based on RRC and is deactivated immediately upon de-configuration of SBFD; an SPS resource that is configured based on RRC and is used immediately upon activation of SBFD; an SPS resource that is configured based on RRC and is used immediately upon activation of DCI and configuration of a first sub-band; or an SPS resource that is configured based on RRC and is used immediately upon activation of DCI and activation of SBFD. The SPS resource corresponds to the first sub-band configuration, is configured in SPS configuration (SPS-config), is terminal-specific DL configuration, or is unassociated with the first sub-band configuration.

Based on above description, the CC resource in the present disclosure is one of: a CG resource that is used immediately upon configuration based on RRC; a CG resource that is configured based on RRC and is used immediately upon activation of DCI; a CG resource that is configured based on RRC and is used immediately upon configuration of a first sub-band; a CG resource that is configured based on RRC and is effected immediately upon configuration of a first sub-band; a CG resource that is configured based on RRC and is activated immediately upon configuration of a first sub-band; a CG resource that is configured based on RRC and is activated immediately upon activation of SBFD; a CG resource that is configured based on RRC and is deactivated immediately upon deactivation of SBFD; a CG resource that is configured based on RRC and is de-configured immediately upon de-configuration of the SBFD; a CG resource that is configured based on RRC and is deactivated immediately upon de-configuration of SBFD; a CG resource that is configured based on RRC and is used immediately upon activation of SBFD; a CG resource that that is configured based on RRC and is used immediately upon activation of DCI and configuration of the first sub-band; or a CG resource that is configured based on RRC and is used immediately upon activation of DCI and activation of SBDF. The CG resource corresponds to the first sub-band configuration, is configured in CG configuration (configuredgrant-config), is terminal-specific UL configuration, or is unassociated with the first sub-band configuration.

In summary, details about determining the SPS resource are provided in the method for determining the transmission resource according to the embodiments of the present disclosure.

Illustratively, in a case where SBFD configuration (indication) is present, how to configure or use the SPS resource is determined or how to perform DL SPS transmission is determined, such that behaviors of the terminal and the network device are clarified, the transmission latency is reduced, and effective transmission is achieved using the resources.

The method for determining the transmission resource according to the embodiments of the present disclosure includes the following processes.

S1, a terminal receives network configuration from a network.

In some embodiments, the network configuration is carried in an RRC signaling. The network configuration is the first indication information in above description. The network configuration includes at least one of the following items.

### 1) SBFD configuration.

The SBFD configuration includes at least one of a slot/symbol of a UL part (or, in which SBFD is supported) or frequency-domain configuration of a UL part (or, in which SBFD is supported). In some embodiments, the SBFD configuration includes SPS configuration configured for the SBFD or SPS configuration for a DL sub-band of an SBFD slot/symbol. In some embodiments, the SPS configuration is conditional, that is, the SPS configuration is configured, activated, or used based on the SBFD configuration.
a) In some embodiments, the SBFD configuration is for the slot, the radio frame, or the symbol.
b) In some embodiments, the SBFD configuration includes one or more types of SBFD configuration.
   i. The SBFD configuration includes at least one of periodic (semi-persistent) SBFD configuration or dynamic/non-periodic SBFD configuration.
   ii. The SBFD configuration includes at least one of common SBFD configuration or UE-specific SBFD configuration.
   iii. In some embodiments, the SPS corresponding to the SBFD is used immediately upon configuration based on the RRC or is configured based on the RRC and is activated immediately upon activation of the DCI.
c) In a case where the SBFD configuration is for the slot or the symbol, indicated levels are the same or different (slots/symbols are different) for different SBFD types.
d) The SBFD configuration is carried in common or cell-level information, UE-specific information, or group-level information.
   i. The common or cell-level information is an RRC message, a SIB message, or a MIB message. In some embodiments, the SIB message is SIB1, SIB2, or another SIB (for example, a new SIB). In some embodiments, the information at least includes at least one of periodic SBFD configuration, semi-persistent SBFD configuration, or common SBFD configuration.
   ii. The UE-specific information includes an RRC specific message or a DCI message. In some embodiments, the information at least includes the UE-specific SBFD configuration or dynamic SBFD configuration.
   iii. The group-level information includes DCI information. In some embodiments, the information at least includes dynamic SBFD configuration.

### 2) SPS configuration and/or CG configuration

For example, CG/SPS configuration per cell is bot bonded with the SBFD configuration.

In S2, based on the network configuration, the terminal determines a position of the SPS, determines whether an SPS resource is available, determines to activate/deactivate/use an SPS resource, or determines to perform UL/DL transmission. specifically, S2 includes at least one of the following processes.
1) The network configures the SPS resource for the BFD configuration. That is, the network configures the SPS resource for an SBFD slot/symbol or a DL sub-band of an SBFD slot/symbol. In some embodiments, the UE uses, activates, or deactivates configuration of the SPS resource for the SBFD. In some embodiments, the UE supports the SBFD or identifies the SBFD.
2) In a case where a slot/symbol is an SBFD slot/symbol, or in a case where SBFD is activated or used in a slot/symbol, the UE activates or uses SPS configuration. The SPS configuration is SPS configuration corresponding to the SBFD, or SPS configuration corresponding to a DL sub-band of the SBFD (otherwise, the SPS configuration is deactivated or not used). In some embodiments, the UE supports the SBFD or identifies the SBFD.
3) In a case where a slot/symbol is not an SBFD slot/symbol, or in a case where SBFD is deactivated or not used in a slot/symbol, the UE uses legacy SPS configuration, and/or, deactivates or does not use SPS configuration corresponding to the SBFD configuration (or SPS configuration corresponding to a DL sub-band of the SBFD configuration). In some embodiments, the UE supports the SBFD or identifies the SBFD, is a legacy UE, or does not support or identify the SBFD.
4) In a case where a slot/symbol is an SBFD slot/symbol, or in a case where SBFD is activated or used in a slot/symbol, the CG configuration is deactivated or not used (for example, a legacy CG is configured in a flexible slot/symbol), legacy CG configuration is determined to be unavailable (for example, a legacy CG is configured in a flexible slot/symbol), SPS configuration is deactivated or not used (for example, a legacy SPS is configured in a DL/flexible slot/symbol. In addition, the legacy SPS is in a UL sub-band part), or, legacy SPS configuration is determined to be unavailable (for example, legacy SPS is configured in a DL/flexible slot/symbol. In addition, the legacy SPS is in a UL sub-band part). In some embodiments, the UE is a legacy UE (deactivated, not used, de-configured based an indication from the network, or practiced by staggering positions of the SBFD and the SPS by the network), or does not support or identify the SBFD.
5) In a case where a slot/symbol is an SBFD slot/symbol, or in a case where SBFD is activated or used in a slot/symbol, a nominal SPS is transformed into an actual SPS based on SBFD configuration (for example, legacy SPS is configured in a DL/flexible slot/symbol. In addition, a part of the legacy SPS is in a UL sub-band part, such that the SPS is transformed into actual SPS, and/or only the SPS resource in the DL sub-band is used), and/or a nominal CG is transformed into an actual CG based on SBFD configuration (For example, legacy CG is configured in a DL/flexible slot/symbol. In addition, a part of the legacy CG is in a UL sub-band part, such that the CG is transformed into an actual CG, and/or only the CG resource in the DL sub-band is used). In some embodiments, the UE supports the SBFD or identifies the SBFD.
6) In a case where a slot/symbol is an SBFD slot/symbol, or in a case where SBFD is activated or used in a slot/symbol, in a UL sub-band of a slot/symbol or a UL sub-band corresponding to SBFD, SPS configuration is deactivated or not used, legacy SPS configuration is determined to be unavailable, an SPS resource corresponding to the SBFD configuration (SPS configuration configured in a DL sub-band of the SBFD) is activated or used, a CG resource corresponding to the SBFD configuration (CG configuration configured in a UL sub-band of the SBFD) is activated or used, an overlapping portion of a legacy SPS and SBFD is activated or used, or an overlapping portion of the legacy SPS and an SBFD SPS is activated or used. In some embodiments, the UE supports the SBFD or identifies the SBFD.
7) The network conditionally configures SPS configuration or conditionally activates/deactivates SPS configuration. That is, SBFD configuration is present or used, a slot/symbol of the SBFD is present or used, or, SPS configuration is configured, activated, or used in a slot/symbol of the SBFD. Accordingly, the UE activates or uses conditional SPS (furthermore, based on non-SBFD, the UE de-configures, deactivates, or does not use SPS configuration).

Referring to FIG. 3, FIG. 6 is a flowchart of a method for determining a transmission resource according to some embodiments of the present disclosure. S102 may be performed in S1022.

**In S1022,** it is determined, based on at least one of the first sub-band configuration or the transmission resource configuration, to activate/deactivate/use/not use/suspend/resume a CG resource.

The first sub-band configuration is the SBFD configuration, and the transmission resource configuration is the CG configuration.

In some embodiments, the CG resource configured by the network device. in some embodiments, S 1022 includes: receiving the CG resource configured by the network device, and using, activating, or deactivating the CG resource configured by the network device.

In some embodiments, the CG resource configured by the network device includes at least one of a first-type CG resource, a second-type CG resource, or a conditional-type CG resource, and/or the CG resource configured by the network device is determined by the network device based on a UL unit or the first sub-band configuration.

In some embodiments, based on at least one of the first sub-band configuration or the transmission resource configuration, the terminal performs at least one of:
· activating or using a first CG resource. The first CG resource is a CG resource corresponding to an SBFD or a CG resource corresponding to a UL sub-band of SBFD;
· deactivating or not using a first CG resource;
· determining a second CG resource to be unavailable;
· deactivating or not using a first SPS resource, wherein the first SPS resource is an SPS resource corresponding to the SBFD or an SPS resource corresponding to a UL sub-band of the SBFD;
· determining a second SPS resource to be unavailable;
· transforming a third SPS resource into an actual SPS resource;
· transforming a third CG resource into an actual CG resource;
· deactivating or not using a first SPS resource in a first UL sub-band of a slot or a symbol or a second UL sub-band corresponding to SBFD;
· determining a second SPS resource to be unavailable in a first UL sub-band or a second UL sub-band;
· activating or using a first SPS resource in a first UL sub-band or a second UL sub-band;
· activating or using a first CG resource in a first UL sub-band or a second UL sub-band;
· activating or using an overlapping portion of a second SPS resource and SBFD in a first UL sub-band or a second UL sub-band; or
· activating or using an overlapping portion of a first SPS resource and SBFD SPS in a first UL sub-band or a second UL sub-band.

In some embodiments, in a case where a condition is satisfied, the terminal performs at least one of the above processes.

That is, in a case where a first condition is satisfied, the terminal performs at least one of the above processes. The first condition includes at least one of: a first time unit being a time unit corresponding to the SBFD; a second time unit being a time unit activated by the SBFD; a first slot being an SBFD slot; a first symbol being an SBFD symbol; the first sub-band configuration being activated in a second slot; or the first sub-band configuration being activated in a second symbol. The first sub-band configuration is the SBFD configuration.

FIG. 7 is a schematic diagram of SBFD slot configuration according to some embodiments of the present disclosure. In some embodiments, the SBFD configuration is supported or not supported in a flexible slot (F slot).

In some embodiments, S1022 includes at least one of processes: deactivating or not using a first CG resource based on at least one of the first sub-band configuration or the transmission resource configuration, wherein the first CG resource is a CG resource corresponding to the first sub-band configuration or a CG resource corresponding to a UL sub-band of the SBFD; or activating or using a second CG resource based on at least one of the first sub-band configuration or the transmission resource configuration.

In some embodiments, in a case where a condition is satisfied, the terminal performs at least one of the above processes.

That is, in a case where a second condition is satisfied, the terminal performs at least one of the above processes. The second condition includes at least one of: a first time unit being not a time unit corresponding to SBFD; a second unit being a time unit activated by SBFD; a first slot being not an SBFD slot; a first symbol being not an SBFD symbol; the first sub-band configuration being deactivated or not used in a second slot; or the first sub-band configuration being deactivated or not used in a second symbol. The first sub-band configuration is the SBFD configuration.

In some embodiments, the terminal performs some operations based on indication information of the network device.

In some embodiments, S1022 further includes: receiving first indication information from the network device, wherein the first indication information is used to configure the CG resource or instructs that the CG resource be activated or deactivated; and configuring, activating, or using the CG resource based on the first indication information.

It is to be understood that the CG configuration is conditionally configured or conditionally activated or deactivated, or the first CG resource/the second CG resource is conditionally configured or conditionally activated or deactivated.

For example, the network device conditionally configures the CG resource or conditionally activates or deactivates the CG resource. That is, the SBFD configuration is present or used, the slot/symbol of the SBFD is present or used, or the CG resource is configured, activated, or used. In some embodiments, the conditionally configured or activated CG is a new CG. In some embodiments, the conditionally configured or activated CG is a type-1 or type 2-CG, and is used in an SBFD condition.

In some embodiments, at least one of the first sub-band configuration or the transmission resource configuration is configured by the network device. In some embodiments, the method for determining the transmission resource according to the present disclosure further includes receiving configuration information from the network device. The configuration information includes at least one of the first sub-band configuration or the transmission resource configuration.

The first sub-band configuration is the SBFD configuration.

In some embodiments, the configuration information from the network device is carried in an RRC signaling.

In some embodiments, the configuration information includes at least one of: common or cell-level configuration information, terminal-specific configuration information, cell-group-level configuration information, or terminal-group-specific configuration information.

In some embodiments, the common or cell-level configuration information is carried in any of an RRC message, a SIB message, or a MIB message.

In some embodiments, the terminal-specific configuration information is carried in any of a terminal-specific RRC message, DCI, or a DL MAC CE.

In some embodiments, the cell-group-level configuration information is carried in DCI or an RRC message.

In some embodiments, the terminal-group-specific configuration information is carried in DCI, a DL MAC CE, or an RRC message.

In some embodiments, the first sub-band configuration includes at least one of: a slot/symbol of a UL part, a slot/symbol in which SBFD is supported, frequency-domain configuration of a UL part, frequency-domain configuration that supports SBFD, SPS configuration corresponding to the first sub-band configuration, CG configuration corresponding to the first sub-band configuration, SPS configuration corresponding to a DL sub-band of an SBFD slot/symbol, or CG configuration corresponding to a DL sub-band of an SBFD slot/symbol.

In some embodiments, a configuration level of the first sub-band configuration is at least one of a slot, a radio frame, or a symbol.

In some embodiments, the first sub-band configuration includes at least one type of first sub-band configuration.

The configuration type of the first sub-band configuration includes at least one of: periodic first sub-band configuration, semi-persistent first sub-band configuration, dynamic first sub-band configuration, non-periodic first sub-band configuration, common first sub-band configuration, terminal-specific first sub-band configuration, or terminal-group-specific first sub-band configuration.

Based on above description, the SPS resource in the present disclosure is one of: an SPS resource that is used immediately upon configuration based on RRC; an SPS resource that is configured based on RRC and is used immediately upon activation of DCI; an SPS resourcee that is configured based on RRC and is used immediately upon configuration of a first sub-band; an SPS resource that is configured based on RRC and is used immediately upon activation of the SBFD; an SPS resource that is configured based on RRC and is used immediately upon activation of DCI and configuration of the first sub-band; or an SPS resource that is configured based on RRC and is used immediately upon activation of DCI and activation of the SBDF.

Based on above description, the CC resource in the present disclosure is one of: a CG resource that is used immediately upon configuration based on RRC; a CG resource that is configured based on RRC and is used immediately upon activation of DCI; a CG resource that is configured based on RRC and is used immediately upon configuration of a first sub-band; a CG resource that is configured based on RRC and is used immediately upon activation of the SBFD; a CG resource that is configured based on RRC and is used immediately upon activation of DCI and configuration of the first sub-band; or a CG resource that is configured based on RRC and is used immediately upon activation of DCI and activation of the SBDF.

In summary, a detail mode for determining the CG resource is provided in the method for determining the transmission resource according to the embodiments of the present disclosure.

Illustratively, in a case where SBFD configuration (indication) is present, how to configure or use the CG resource is determined or how to perform UL CG transmission is determined, such that behaviors of the UE and the network device are clarified, and effective transmission is achieved using the resources.

The method for determining the transmission resource according to the embodiments of the present disclosure includes the following processes.

S1, a terminal receives network configuration from a network.

In some embodiments, the network configuration is carried in an RRC signaling. The network configuration is the second indication information in above description. The network configuration includes at least one of the following items.

### 1) SBFD configuration.

The SBFD configuration includes at least one of a slot/symbol of a UL part (or, in which SBFD is supported) or frequency-domain configuration of a UL part (or, in which SBFD is supported). In some embodiments, the SBFD configuration includes CG configuration configured for the SBFD or CG configuration for a DL sub-band of an SBFD slot/symbol. In some embodiments, the CG configuration is conditional, that is, the CG configuration is configured, activated, or used based on the SBFD configuration.
a) In some embodiments, the SBFD configuration is present or used, a slot/symbol of the SBFD is present or used, CG configuration is configured, activated, or used in a slot/symbol of the SBFD.
b) In some embodiments, conditionally configured or activated CG is new CG.
c) In some embodiments, the conditionally configured or activated CG is type 1 or type 2, and the CG is used in an SBFD condition.
d) The CG corresponding to the SBFD is used immediately upon configuration based on the RRC, or is configured based on the RRC and activated based on the DCI.
e) In some embodiments, the SBFD configuration is for the slot, the radio frame, or the symbol.
f) In some embodiments, the SBFD configuration includes one or more types of SBFD configuration.
   i. The SBFD configuration includes at least one of periodic (semi-persistent) SBFD configuration or dynamic/non-periodic SBFD configuration.
   ii. The SBFD configuration includes at least one of common SBFD configuration or UE-specific SBFD configuration.
g) In a case where the SBFD configuration is for the slot or the symbol, indicated granularities are the same or different (slots/symbols are different) for different SBFD types.
h) The SBFD configuration is carried in common or cell-level information, UE-specific information, or group-level information.
   i. The common or cell-level information is an RRC message, a SIB message, or a MIB message. In some embodiments, the SIB message is SIB1, SIB2, or another SIB (for example, a new SIB). In some embodiments, the information at least includes at least one of periodic SBFD configuration, semi-persistent SBFD configuration, or common SBFD configuration.
   ii. The UE-specific information includes an RRC specific message or a DCI message. In some embodiments, the information at least includes the UE-specific SBFD configuration or dynamic SBFD configuration.
   iii. The group-level information includes a DCI information. In some embodiments, the information at least includes dynamic SBFD configuration.

### 2) SPS configuration and/or CG configuration

For example, CG/SPS configuration per cell is bot bonded with the SBFD configuration.

In S2, based on the network configuration, the terminal determines a position of the CG, determines whether a CG resource is available, determines to activate/deactivate/use a CG resource, or determines to perform UL/DL transmission. specifically, S2 includes at least one of the following processes.
1) The network configures the CG resource for the BFD configuration. That is, the network configures the CG resource for an SBFD slot/symbol or a UL sub-band of an SBFD slot/symbol. In some embodiments, the CG is type 1 CG, type 2 CG, or conditional CG. In some embodiments, the UE uses, activates, or deactivates configuration of the CG resource for the SBFD. In some embodiments, the UE supports the SBFD or identifies the SBFD.
2) In a case where a slot/symbol is an SBFD slot/symbol, or in a case where SBFD is activated or used in a slot/symbol, the UE activates or uses CG configuration. The CG configuration is CG configuration corresponding to the SBFD, or CG configuration corresponding to a UL sub-band of the SBFD (otherwise, the CG configuration is deactivated or not used). In some embodiments, UE supports the SBFD or identifies the SBFD.
3) In a case where a slot/symbol is not an SBFD slot/symbol, or in a case where SBFD is deactivated or not used in a slot/symbol, the UE uses legacy CG configuration, and/or, deactivates or does not use CG configuration corresponding to the SBFD configuration (or CG configuration corresponding to a UL sub-band of the SBFD configuration). In some embodiments, UE supports the SBFD or identifies the SBFD, is a legacy UE, or does not support or identify the SBFD.
4) In a case where a slot/symbol is an SBFD slot/symbol, or in a case where SBFD is activated or used in a slot/symbol, the CG configuration is deactivated or not used (for example, legacy CG is configured in a flexible slot/symbol), legacy CG configuration is determined to be unavailable (for example, legacy CG is configured in a flexible slot/symbol), SPS configuration is deactivated or not used (for example, legacy SPS is configured in a DL/flexible slot/symbol. In addition, the legacy SPS is in a UL sub-band part), or, legacy SPS configuration is determined to be unavailable (for example, legacy SPS is configured in a DL/flexible slot/symbol. In addition, the legacy SPS is in a UL sub-band part). In some embodiments, the UE is a legacy UE (deactivated, nor used, de-configured based an indication from the network, or practiced by staggering positions of the SBFD and the SPS by the network), or does not support or identify the SBFD.
5) In a case where a slot/symbol is an SBFD slot/symbol, or in a case where SBFD is activated or used in a slot/symbol, nominal SPS is transformed into actual SPS based on SBFD configuration (for example, legacy SPS is configured in a DL/flexible slot/symbol. In addition, a part of the legacy SPS is in a UL sub-band part, such that the SPS is transformed into actual SPS, and/or only the SPS resource in the DL sub-band is used), and/or nominal CG is transformed into actual CG based on SBFD configuration (for example, legacy CG is configured in a DL/flexible slot/symbol. In addition, a part of the legacy CG is in a UL sub-band part, such that the CG is transformed into an actual CG, and/or only the CG resource in the DL sub-band is used). In some embodiments, the UE supports the SBFD or identifies the SBFD.
6) In a case where a slot/symbol is an SBFD slot/symbol, or in a case where SBFD is activated or used in a slot/symbol, in a UL sub-band of a slot/symbol or a UL sub-band corresponding to the SBFD, SPS configuration is deactivated or not used, legacy SPS configuration is determined to be unavailable, an SPS resource corresponding to the SBFD configuration (SPS configuration configured in a DL sub-band of the SBFD) is activated or used, a CG resource corresponding to the SBFD configuration (CG configuration configured in a UL sub-band of the SBFD) is activated or used, an overlapping portion of legacy CG and SBFD is activated or used, or an overlapping portion of legacy CG and SBFD SPS is activated or used. In some embodiments, the UE supports the SBFD or identifies the SBFD.
7) The network conditionally configures CG configuration or conditionally activates/deactivates CG configuration. That is, SBFD configuration is present or used, a slot/symbol of the SBFD is present or used, or, CG configuration is configured, activated, or used in a slot/symbol of the SBFD. Accordingly, the UE activates or uses conditional CG (furthermore, based on non-SBFD, the UE de-configures, deactivates, or does not use CG configuration).

It should be understood that various methods in above description may be performed independently or in conjunction with other methods. That is, the various embodiments in above description may be performed independently or in conjunction with other embodiments. Illustratively, at least one of the SPS resource or the CG resource is determined to be activated/deactivated/used/not used/suspended/resumed based on at least one of the first sub-band configuration or the transmission resource configuration. Methods performed in communication fall within the scope of protection of the present disclosure, which are not elaborated herein.

The following are the apparatus embodiments of the present disclosure. For details not described in detail in the apparatus embodiments, reference may be made to the corresponding method embodiments, which are not elaborated herein.

FIG. 8 is a schematic diagram of an apparatus for determining a transmission resource according to some embodiments of the present disclosure. The apparatus includes a determining module 820.

The determining module 820 is configured to determine at least one of a UL transmission resource or a DL transmission resource based on at least one of first sub-band configuration or transmission resource configuration.

In some embodiments, the determining module 820 is configured to: determine, based on at least one of the first sub-band configuration or the transmission resource configuration, at least one of a resource position of the UL transmission resource or a resource position of the DL transmission resource for resource transmission; and/or determine at least one of an available state of the UL transmission resource or an available state of the DL transmission resource based on at least one of the first sub-band configuration or the transmission resource configuration; and/or determine, based on at least one of the first sub-band configuration or the transmission resource configuration, whether to use at least one of the UL transmission resource or the DL transmission resource for resource transmission.

In some embodiments, the determining module 820 is configured to determine to activate/deactivate/use/not use/suspend/resume an SPS resource based on at least one of the first sub-band configuration or the transmission resource configuration.

In some embodiments, the determining module 820 is configured to: receive the SPS resource configured by a network device; and use, activate, or deactivate the SPS resource configured by the network device.

In some embodiments, the SPS resource configured by the network device includes at least one of a first-type SPS resource, a second-type SPS resource, or a conditional-type SPS resource, and/or the SPS resource configured by the network device is determined by the network device based on a DL unit or the first sub-band configuration.

In some embodiments, the determining module 820 is configured to: based on at least one of the first sub-band configuration or the transmission resource configuration, perform at least one of processes: activating or using a first SPS resource, wherein the first SPS resource is an SPS resource corresponding to SBFD or an SPS resource corresponding to a UL sub-band of SBFD; deactivating or not using a first CG resource, wherein the first CG resource is a CG resource corresponding to SBFD or a CG resource corresponding to a UL sub-band of SBFD; activating or using a first CG resource; determining a second CG resource to be unavailable; deactivating or not using a first SPS resource; determining a second SPS resource to be unavailable; transforming a third SPS resource into an actual SPS resource; transforming a third CG resource into an actual CG resource; deactivating or not using a first SPS resource in a first UL sub-band of a slot or a symbol or a second UL sub-band corresponding to SBFD; determining a second SPS resource to be unavailable in a first UL sub-band or a second UL sub-band; activating or using a first SPS resource in a first UL sub-band or a second UL sub-band; activating or using a first CG resource in a first UL sub-band or a second UL sub-band; activating or using an overlapping portion of a second SPS resource and SBFD in a first UL sub-band or a second UL sub-band; or activating or using an overlapping portion of a first SPS resource and SBFD SPS in a first UL sub-band or a second UL sub-band.

In some embodiments, in a case where a first condition is satisfied, the terminal performs at least one of the processes, wherein the first condition includes at least one of: a first time unit being a time unit corresponding to the SBFD; a second time unit being a time unit activated by the SBFD; a first slot being an SBFD slot; a first symbol being an SBFD symbol; the first sub-band configuration being activated in a second slot; or the first sub-band configuration being activated in a second symbol.

In some embodiments, the determining module 820 is configured to: deactivate or not use a first SPS resource based on at least one of the first sub-band configuration or the transmission resource configuration, wherein the first SPS resource is an SPS resource corresponding to the first sub-band configuration; and/or, activate or use a second SPS resource based on at least one of the first sub-band configuration or the transmission resource configuration.

In some embodiments, in a case where a second condition is satisfied, the terminal performs at least one of the processes, wherein the second condition includes at least one of: a first time unit being not a time unit corresponding to SBFD; a second unit being a time unit activated by SBFD; a first slot being not an SBFD slot; a first symbol being not an SBFD symbol; the first sub-band configuration being deactivated or not used in a second slot; or the first sub-band configuration being deactivated or not used in a second symbol.

In some embodiments, the determining module 820 is configured to: receive first indication information from a network device, wherein the first indication information is used to configure the SPS resource or instructs that the SPS resource be activated or deactivated; and configured, activated, or used the SPS resource based on the first indication information.

In some embodiments, the determining module 820 is configured to: determine to activate/deactivate/use/not use/suspend/resume a CG resource.

In some embodiments, the determining module 820 is configured to: receive the CG resource configured by a network device; and us4, activat4, or deactivate the CG resource configured by the network device.

In some embodiments, the CG resource configured by the network device includes at least one of a first-type CG resource, a second-type CG resource, or a conditional-type CG resource, and/or the CG resource configured by the network device is determined by the network device based on a UL unit or the first sub-band configuration.

In some embodiments, the determining module 820 is configured to: based on at least one of the first sub-band configuration or the transmission resource configuration, perform at least one of processes: activating or using a first CG resource, wherein the first CG resource is a CG resource corresponding to SBFD or a CG resource corresponding to a UL sub-band of SBFD; deactivating or not using a first CG resource; determining a second CG resource to be unavailable; deactivating or not using a first CG SPS resource, wherein the first SPS resource is an SPS resource corresponding to SBFD or an SPS resource corresponding to a UL sub-band of SBFD; determining a second SPS resource to be unavailable; transforming a third SPS resource into an actual SPS resources; transforming a third CG resource into an actual CG resource; deactivating or not using a first SPS resource in a first UL sub-band of a slot or a symbol or a second UL sub-band corresponding to SBFD; determining a second SPS resource to be unavailable in a first UL sub-band or a second UL sub-band; activating or using a first SPS resource in a first UL sub-band or a second UL sub-band; activating or using a first CG resource in a first UL sub-band or a second UL sub-band; activating or using an overlapping portion of a second CG resource and SBFD in a first UL sub-band or a second UL sub-band; or activating or using an overlapping portion of a first CG resource and SBFD SPS in a first UL sub-band or a second UL sub-band.

In some embodiments, in a case where a first condition is satisfied, the terminal performs at least one of the processes, wherein the first condition includes at least one of: a first time unit being a time unit corresponding to SBFD; a second time unit being a time unit activated by SBFD; a first slot being an SBFD slot; a first symbol being an SBFD symbol; the first sub-band configuration being activated in a second slot; or the first sub-band configuration being activated in a second symbol.

In some embodiments, the determining module 820 is configured to: deactivate or not use a first CG resource based on at least one of the first sub-band configuration or the transmission resource configuration, wherein the first CG resource is a CG resource corresponding to a UL sub-band of SBFD; and/or activate or use a second CG resource based on at least one of the first sub-band configuration or the transmission resource configuration.

In some embodiments, in a case where a second condition is satisfied, the terminal performs at least one of the processes, wherein the second condition includes at least one of: a first time unit being not a time unit corresponding to SBFD; a second unit being a time unit activated by SBFD; a first slot being not an SBFD slot; a first symbol being not an SBFD symbol; the first sub-band configuration being deactivated or not used in a second slot; or the first sub-band configuration being deactivated or not used in a second symbol.

In some embodiments, the determining module 820 is configured to: receive second indication information from a network device, wherein the second indication information is used to configure the CG resource or instructs that the CG resource be activated or deactivated; and configure, activate, or use the CG resource based on the second indication information.

In some embodiments, the terminal includes at least one of: a terminal that supports SBFD and/or identifies SBFD, a first terminal, a terminal that does not support SBFD and/or does not identify SBFD, a terminal at a predetermined version, or a terminal at a version earlier than a predetermined version.

In some embodiments, the apparatus further includes a receiving module 840, configured to receive configuration information from a network device, wherein the configuration information includes at least one of the first sub-band configuration or the transmission resource configuration.

In some embodiments, the configuration information includes at least one of: common or cell-level configuration information, terminal-specific configuration information, cell-group-level configuration information, or terminal-group-specific configuration information.

In some embodiments, the common or cell-level configuration information is carried in any of an RRC message, a SIB message, or a MIB message.

In some embodiments, the terminal-specific configuration information is carried in any of a terminal-specific RRC message, DCI, or a DL MAC CE.

In some embodiments, the cell-group-level configuration information is carried in DCI or an RRC message.

In some embodiments, the terminal-group-specific configuration information is carried in DCI, a DL MAC CE, or an RRC message.

In some embodiments, the first sub-band configuration includes at least one of: a slot/symbol of a UL part, a slot/symbol in which SBFD is supported, frequency-domain configuration of a UL part, frequency-domain configuration that supports SBFD, SPS configuration corresponding to the first sub-band configuration, CG configuration corresponding to the first sub-band configuration, SPS configuration corresponding to a DL sub-band of an SBFD slot/symbol, or CG configuration corresponding to a DL sub-band of an SBFD slot/symbol.

In some embodiments, a configuration level of the first sub-band configuration is at least one of a slot, a radio frame, or a symbol.

In some embodiments, the first sub-band configuration includes at least one type of first sub-band configuration.

In some embodiments, a configuration type of the first sub-band configuration includes at least one of: periodic first sub-band configuration, semi-persistent first sub-band configuration, dynamic first sub-band configuration, non-periodic first sub-band configuration, common first sub-band configuration, terminal-specific first sub-band configuration, or terminal-group-specific first sub-band configuration.

In some embodiments, the SPS resource is an SPS resource that is used immediately upon configuration based on RRC; the SPS resource is an SPS resource that is configured based on RRC and is used immediately upon activation of DCI; the SPS resource is an SPS resource that is configured based on RRC and is used immediately upon configuration of the first sub-band; the SPS resource is an SPS resource that is configured based on RRC and is effected immediately upon configuration of the first sub-band; the SPS resource is an SPS resource that is configured based on RRC and is activated immediately upon configuration of the first sub-band; the SPS resource is an SPS resource that is configured based on RRC and is activated immediately upon activation of SBFD; the SPS resource is an SPS resource that is configured based on RRC and is deactivated immediately upon deactivation of SBFD; the SPS resource is an SPS resource that is configured based on RRC and is de-configured immediately upon de-configuration of SBFD; the SPS resource is an SPS resource that is configured based on RRC and is deactivated immediately upon de-configuration of SBFD; the SPS resource is an SPS resource that is configured based on RRC and is used immediately upon activation of SBFD; the SPS resource is an SPS resource that is configured based on RRC and is used immediately upon activation of DCI and configuration of a first sub-band; or the SPS resource is an SPS resource that is configured based on RRC and is used immediately upon activation of DCI and activation of SBFD; wherein the SPS resource corresponds to the first sub-band configuration, is configured in SPS configuration, is terminal-specific downlink configuration, or is unassociated with the first sub-band configuration.

In some embodiments, the CG resource is a CG resource that is used immediately upon configuration based on RRC; the CG resource is a CG resource that is configured based on RRC and is used immediately upon activation of DCI; the CG resource is a CG resource that is configured based on RRC and is used immediately upon configuration of a first sub-band; the CG resource is a CG resource that is configured based on RRC and is effected immediately upon configuration of a first sub-band; the CG resource is a CG resource that is configured based on RRC and is activated immediately upon configuration of a first sub-band; the CG resource is a CG resource that is configured based on RRC and is activated immediately upon activation of the SBFD; the CG resource is a CG resource that is configured based on RRC and is deactivated immediately upon deactivation of the SBFD; the CG resource is a CG resource that is configured based on RRC and is de-configured immediately upon de-configuration of the SBFD; the CG resource is a CG resource that is configured based on RRC and is deactivated immediately upon de-configuration of the SBFD; the CG resource is a CG resource that is configured based on RRC and is used immediately upon activation of the SBFD; the CG resource is a CG resource that that is configured based on RRC and is used immediately upon activation of DCI and configuration of the first sub-band; or the CG resource is a CG resource that is configured based on RRC and is used immediately upon activation of DCI and activation of the SBDF; wherein the CG resource corresponds to the first sub-band configuration, is configured in CG configuration, is terminal-specific uplink configuration, or is unassociated with the first sub-band configuration.

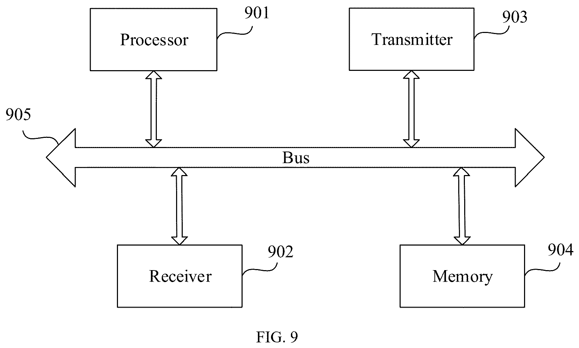

FIG. 9 is a schematic structural diagram of a communication device (a terminal device or a network device) according to some embodiments of the present disclosure. The communication device includes: a processor 901, a receiver 902, a transmitter 903, a memory 904, and a bus 905.

The processor 901 includes one or more processing cores, and achieves various functional applications and information processing by running software programs and modules.

The receiver 902 and the transmitter 903 are practiced as a communication assembly. The communication assembly is a communication chip.

The memory 904 is connected to the processor 901 over the bus 905.

The memory 904 is configured to store one or more instructions, and the processor 901 is configured to load and execute the one or more instructions to perform various processes in the above method embodiments.

In addition, the memory 904 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

Some embodiments of the present disclosure further provide terminal. The terminal includes a processor configured to perform the above method for determining the transmission resource.

Some embodiments of the present disclosure further provide a computer-readable storage medium storing one or more computer programs. The one or more computer programs, when loaded and run by a processor, cause the processor to perform the above method for determining the transmission resource.

Some embodiments of the present disclosure further provide a chip. The chip includes programmable logic circuity and/or program instructions, and the chip, when running, is configured to perform the above method for determining the transmission resource.

Some embodiments of the present disclosure further provide a computer program product or computer program is provided. The computer program includes one or more computer instructions. The one or more computer instructions are stored in a computer-readable storage medium, and when read and executed by a processor, cause the processor to perform the above method for determining the transmission resource.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for determining transmission resources, performed by a terminal, the method comprising:
determining at least one of an uplink transmission resource or a downlink transmission resource based on at least one of first sub-band configuration or transmission resource configuration.

2. The method according to claim 1, wherein determining at least one of the uplink transmission resource or the downlink transmission resource based on at least one of the first sub-band configuration or the transmission resource configuration comprises at least one of:
determining, based on at least one of the first sub-band configuration or the transmission resource configuration, at least one of a resource position of the uplink transmission resource or a resource position of the downlink transmission resource;
determining at least one of an available state of the uplink transmission resource or an available state of the downlink transmission resource based on at least one of the first sub-band configuration or the transmission resource configuration; or
determining, based on at least one of the first sub-band configuration or the transmission resource configuration, whether to use at least one of the uplink transmission resource or the downlink transmission resource for resource transmission.

3. The method according to claim 1 or 2, wherein determining at least one of the uplink transmission resource or the downlink transmission resource based on at least one of the first sub-band configuration or the transmission resource configuration comprises:
determining to activate/deactivate/use/not use/suspend/resume a semi-persistent scheduling (SPS) resource based on at least one of the first sub-band configuration or the transmission resource configuration.

4. The method according to claim 3, wherein determining to activate/deactivate/use the SPS resource based on at least one of the first sub-band configuration or the transmission resource configuration comprises:
receiving the SPS resource configured by a network device; and
using, activating, or deactivating the SPS resource configured by the network device.

5. The method according to claim 4, wherein the SPS resource configured by the network device comprises at least one of a first-type SPS resource, a second-type SPS resource, or a conditional-type SPS resource, and/or the SPS resource configured by the network device is determined by the network device based on a downlink unit or the first sub-band configuration.

6. The method according to any one of claims 3 to 5, wherein determining to activate/deactivate/use/not use the SPS resource based on at least one of the first sub-band configuration or the transmission resource configuration comprises:
based on at least one of the first sub-band configuration or the transmission resource configuration, performing at least one of processes:
activating or using a first SPS resource, wherein the first SPS resource is an SPS resource corresponding to sub-band full duplex (SBFD) or an SPS resource corresponding to an uplink sub-band of SBFD;
deactivating or not using a first configured grant (CG) resource, wherein the first CG resource is a CG resource corresponding to SBFD or a CG resource corresponding to an uplink sub-band of SBFD;
activating or using a first CG resource;
determining a second CG resource (that is, a legacy CG resource) to be unavailable;
deactivating or not using a first SPS resource;
determining a second SPS resource (that is, a legacy SPS resource) to be unavailable;
transforming a third SPS resource (that is, a nominal SPS resource) into an actual SPS resource;
transforming a third CG resource into an actual CG resource;
deactivating or not using a first SPS resource in a first uplink sub-band of a slot or a symbol or a second uplink sub-band corresponding to SBFD;
determining a second SPS resource to be unavailable in a first uplink sub-band or a second uplink sub-band;
activating or using a first SPS resource in a first uplink sub-band or a second uplink sub-band;
activating or using a first CG resource in a first uplink sub-band or a second uplink sub-band;
activating or using an overlapping portion of a second SPS resource and SBFD in a first uplink sub-band or a second uplink sub-band; or
activating or using an overlapping portion of a first SPS resource and SBFD SPS in a first uplink sub-band or a second uplink sub-band.

7. The method according to claim 6, wherein in a case where a first condition is satisfied, the terminal performs at least one of the processes, wherein the first condition comprises at least one of:
a first time unit being a time unit corresponding to the SBFD;
a second time unit being a time unit activated by the SBFD;
a first slot being an SBFD slot;
a first symbol being an SBFD symbol;
the first sub-band configuration being activated in a second slot; or
the first sub-band configuration being activated in a second symbol.

8. The method according to any one of claims 3 to 5, wherein determining to activate/deactivate/use/not use the SPS resource based on at least one of the first sub-band configuration or the transmission resource configuration comprises at least one of processes:
deactivating or not using a first SPS resource based on at least one of the first sub-band configuration or the transmission resource configuration, wherein the first SPS resource is an SPS resource corresponding to the first sub-band configuration; or
activating or using a second SPS resource (that is, legacy SPS) based on at least one of the first sub-band configuration or the transmission resource configuration.

9. The method according to claim 8, wherein in a case where a second condition is satisfied, the terminal performs at least one of the processes, wherein the second condition comprises at least one of:
a first time unit being not a time unit corresponding to sub-band full duplex (SBFD);
a second unit being a time unit activated by SBFD;
a first slot being not an SBFD slot;
a first symbol being not an SBFD symbol;
the first sub-band configuration being deactivated or not used in a second slot; or
the first sub-band configuration being deactivated or not used in a second symbol.

10. The method according to any one of claims 3 to 5, wherein determining to activate/use the SPS resource based on at least one of the first sub-band configuration or the transmission resource configuration comprises:
receiving first indication information from a network device, wherein the first indication information is used to configure the SPS resource or instructs that the SPS resource be activated or deactivated; and
configuring, activating, or using the SPS resource based on the first indication information.

11. The method according to claim 1 or 2, wherein determining at least one of the uplink transmission resource or the downlink transmission resource based on at least one of the first sub-band configuration or the transmission resource configuration comprises:
determining to activate/deactivate/use/not use/suspend/resume a configured grant (CG) resource.

12. The method according to claim 11, wherein determining to activate/deactivate/use the CG resource comprises:
receiving the CG resource configured by a network device; and
using, activating, or deactivating the CG resource configured by the network device.

13. The method according to claim 12, wherein the CG resource configured by the network device comprises at least one of a first-type CG resource, a second-type CG resource, or a conditional-type CG resource, and/or the CG resource configured by the network device is determined by the network device based on an uplink unit or the first sub-band configuration.

14. The method according to any one of claims 11 to 13, wherein determining to activate/deactivate/use/not use the CG resource based on at least one of the first sub-band configuration or the transmission resource configuration comprises:
based on at least one of the first sub-band configuration or the transmission resource configuration, performing at least one of processes of:
activating or using a first CG resource, wherein the first CG resource is a CG resource corresponding to sub-band full duplex (SBFD) or a CG resource corresponding to an uplink sub-band of SBFD;
deactivating or not using a first CG resource;
determining a second CG resource to be unavailable;
deactivating or not using a first CG SPS resource, wherein the first SPS resource is an SPS resource corresponding to SBFD or an SPS resource corresponding to an uplink sub-band of SBFD;
determining a second SPS resource to be unavailable;
transforming a third SPS resource into an actual SPS resource;
transforming a third CG resource into an actual CG resource;
deactivating or not using a first SPS resource in a first uplink sub-band of a slot or a symbol or a second uplink sub-band corresponding to SBFD;
determining a second SPS resource to be unavailable in a first uplink sub-band or a second uplink sub-band;
activating or using a first SPS resource in a first uplink sub-band or a second uplink sub-band;
activating or using a first CG resource in a first uplink sub-band or a second uplink sub-band;
activating or using an overlapping portion of a second CG resource and SBFD in a first uplink sub-band or a second uplink sub-band; or
activating or using an overlapping portion of a first CG resource and SBFD SPS in a first uplink sub-band or a second uplink sub-band.

15. The method according to claim 14, wherein in a case where a first condition is satisfied, the terminal performs at least one of the processes, wherein the first condition comprises at least one of:
a first time unit being a time unit corresponding to the SBFD;
a second time unit being a time unit activated by the SBFD;
a first slot being an SBFD slot;
a first symbol being an SBFD symbol;
the first sub-band configuration being activated in a second slot; or
the first sub-band configuration being activated in a second symbol.

16. The method according to any one of claims 11 to 13, wherein determining to activate/deactivate/use/not use the CG resource based on at least one of the first sub-band configuration or the transmission resource configuration comprises at least one of processes of:
deactivating or not using a first CG resource based on at least one of the first sub-band configuration or the transmission resource configuration, wherein the first CG resource is a CG resource corresponding to an uplink sub-band of sub-band full duplex (SBFD); or
activating or using a second CG resource based on at least one of the first sub-band configuration or the transmission resource configuration.

17. The method according to claim 16, wherein in a case where a second condition is satisfied, the terminal performs at least one of the processes, wherein the second condition comprises at least one of:
a first time unit being not a time unit corresponding to the SBFD;
a second unit being a time unit activated by the SBFD;
a first slot being not an SBFD slot;
a first symbol being not an SBFD symbol;
the first sub-band configuration being deactivated or not used in a second slot; or
the first sub-band configuration being deactivated or not used in a second symbol.

18. The method according to any one of claims 11 to 13, wherein determining to activate/use the CG resource based on at least one of the first sub-band configuration or the transmission resource configuration comprises:
receiving second indication information from a network device, wherein the second indication information is used to configure the CG resource or instructs that the CG resource be activated or deactivated; and
configuring, activating, or using the CG resource based on the second indication information.

19. The method according to any one of claims 3 to 18, wherein the terminal comprises at least one of: a terminal that supports sub-band full duplex (SBFD) and/or identifies SBFD, a first terminal, a terminal that does not support SBFD and/or does not identify SBFD, a terminal at a predetermined version, or a terminal of a version earlier than a predetermined version.

20. The method according to any one of claims 3 to 19, further comprising:
receiving configuration information from a network device, wherein the configuration information comprises at least one of the first sub-band configuration or the transmission resource configuration.

21. The method according to claim 20, wherein the configuration information comprises at least one of: common or cell-level configuration information, terminal-specific configuration information, cell-group-level configuration information, or terminal-group-specific configuration information.

22. The method according to claim 21, wherein the common or cell-level configuration information is carried in any of a radio resource control (RRC) message, a system information block (SIB) message, or a master information block (MIB) message.

23. The method according to claim 21, wherein the terminal-specific configuration information is carried in any of a terminal-specific radio resource control (RRC) message, downlink control information (DCI), or a downlink medium access control (MAC) control element (CE).

24. The method according to claim 21, wherein the cell-group-level configuration information is carried in downlink control information (DCI) or a radio resource control (RRC) message.

25. The method according to claim 21, wherein the terminal-group-specific configuration information is carried in downlink control information (DCI), a downlink medium access control (MAC) control element (CE), or a radio resource control (RRC) message.

26. The method according to any one of claims 3 to 19, wherein the first sub-band configuration comprises at least one of: a slot/symbol of an uplink part, a slot/symbol in which sub-band full duplex (SBFD) is supported, frequency-domain configuration of an uplink part, frequency-domain configuration that supports SBFD, SPS configuration corresponding to the first sub-band configuration, configured grant (CG) configuration corresponding to the first sub-band configuration, SPS configuration corresponding to a downlink sub-band of an SBFD slot/symbol, or CG configuration corresponding to a downlink sub-band of an SBFD slot/symbol.

27. The method according to any one of claims 3 to 19, wherein a configuration level of the first sub-band configuration is at least one of a slot, a radio frame, or a symbol.

28. The method according to any one of claims 3 to 19, wherein the first sub-band configuration comprises at least one type of first sub-band configuration.

29. The method according to claim 28, wherein a configuration type of the first sub-band configuration comprises at least one of: periodic first sub-band configuration, semi-persistent first sub-band configuration, dynamic first sub-band configuration, non-periodic first sub-band configuration, common first sub-band configuration, terminal-specific first sub-band configuration, or terminal-group-specific first sub-band configuration.

30. The method according to any one of claims 3 to 29, wherein
the SPS resource is an SPS resource that is used immediately upon configuration based on radio resource control (RRC);
the SPS resource is an SPS resource that is configured based on RRC and is used immediately upon activation of downlink control information (DCI);
the SPS resource is an SPS resource that is configured based on RRC and is used immediately upon configuration of the first sub-band;
the SPS resource is an SPS resource that is configured based on RRC and is effected immediately upon configuration of the first sub-band;
the SPS resource is an SPS resource that is configured based on RRC and is activated immediately upon configuration of the first sub-band;
the SPS resource is an SPS resource that is configured based on RRC and is activated immediately upon activation of sub-band full duplex (SBFD);
the SPS resource is an SPS resource that is configured based on RRC and is deactivated immediately upon deactivation of SBFD;
the SPS resource is an SPS resource that is configured based on RRC and is de-configured immediately upon de-configuration of SBFD;
the SPS resource is an SPS resource that is configured based on RRC and is deactivated immediately upon de-configuration of SBFD;
the SPS resource is an SPS resource that is configured based on RRC and is used immediately upon activation of SBFD;
the SPS resource is an SPS resource that is configured based on RRC and is used immediately upon activation of DCI and configuration of a first sub-band; or
the SPS resource is an SPS resource that is configured based on RRC and is used immediately upon activation of DCI and activation of SBFD;
wherein the SPS resource corresponds to the first sub-band configuration, is configured in SPS configuration, is terminal-specific downlink configuration, or is unassociated with the first sub-band configuration.

31. The method according to any one of claims 6 to 29, wherein
the CG resource is a CG resource that is used immediately upon configuration based on radio resource control (RRC);
the CG resource is a CG resource that is configured based on RRC and is used immediately upon activation of downlink control information (DCI);
the CG resource is a CG resource that is configured based on RRC and is used immediately upon configuration of a first sub-band;
the CG resource is a CG resource that is configured based on RRC and is effected immediately upon configuration of a first sub-band;
the CG resource is a CG resource that is configured based on RRC and is activated immediately upon configuration of a first sub-band;
the CG resource is a CG resource that is configured based on RRC and is activated immediately upon activation of the SBFD;
the CG resource is a CG resource that is configured based on RRC and is deactivated immediately upon deactivation of the SBFD;
the CG resource is a CG resource that is configured based on RRC and is de-configured immediately upon de-configuration of the SBFD;
the CG resource is a CG resource that is configured based on RRC and is deactivated immediately upon de-configuration of the SBFD;
the CG resource is a CG resource that is configured based on RRC and is used immediately upon activation of the SBFD;
the CG resource is a CG resource that that is configured based on RRC and is used immediately upon activation of DCI and configuration of the first sub-band; or
the CG resource is a CG resource that is configured based on RRC and is used immediately upon activation of DCI and activation of the SBDF;
wherein the CG resource corresponds to the first sub-band configuration, is configured in CG configuration, is terminal-specific uplink configuration, or is unassociated with the first sub-band configuration.

32. An apparatus for determining a transmission resource, comprising:
a determining module, configured to determine at least one of an uplink transmission resource or a downlink transmission resource based on at least one of first sub-band configuration or transmission resource configuration.

33. A terminal, comprising: a processor, wherein the processor is configured to perform the method for determining the transmission resource as defined in any one of claims 1 to 31.

34. A computer-readable storage medium, storing one or more computer programs, wherein the one or more computer programs, when loaded and run by a processor, cause the processor to perform the method for determining the transmission resource as defined in any one of claims 1 to 31.

35. A chip, comprising: programmable logical circuity and/or one or more program instructions, wherein the chip is configured to perform the method for determining the transmission resource as defined in any one of claims 1 to 31.

36. A computer program product or computer program, comprising: one or more computer instructions, wherein the one or more computer instructions are stored in a computer-readable storage medium, and when read and executed by a processor, cause the processor to perform the method for determining the transmission resource as defined in any one of claims 1 to 31.
